# DEMANDE DE BREVET EUROPEEN

(11) **EP 0 980 898 A1**
(43) Date de publication de la demande: **23.02.2000**
(21) Numéro de dépôt: 99490025.6
(22) Date de dépôt: 16.08.1999
(51) Int. Cl.: C09D 5/20, C09D 7/12

(54) **Matériau pour la protection de surface notamment métallique et procédé d'application d'un tel matériau**

(30) Priorité: 18.08.1998 FR 9810639
(71) Demandeur: Protectogrele, 62100 Calais (FR)
(72) Inventeur: Masson, Luc, 62360 Condette (FR); De Prat, Laurent, 62360 Condette (FR); Habart, Philippe, 62250 Maninghen-Henne (FR)
(74) Mandataire: Hénnion, Jean-Claude

(57) **Abrégé**

Le matériau pour la protection d'une surface, notamment métallique, selon l'invention se présente sous la forme d'un film adhérent à ladite surface et apte à être éliminé, et comporte un constituant absorbeur de chocs, notamment une charge de micro-particules d'élastomères ou de caoutchouc.

Le procédé pour l'application sur une surface à protéger du matériau consiste :
- à réaliser un mélange homogène de deux constituants, à savoir un premier constituant de base apte à former un film susceptible d'adhérer à la surface à protéger et à être ensuite éliminé et un second constituant absorbeur de chocs,
- à appliquer ledit mélange sur la surface à protéger en une ou plusieurs couches.

## Description

La présente invention concerne un matériau destiné à protéger une surface, notamment métallique, par exemple mais non exclusivement la carrosserie d'un véhicule automobile, ledit matériau étant apte à assurer une protection temporaire de ladite surface, par exemple pendant une période de stockage et/ou de transit et pouvant, par la suite, être éliminée facilement et sans altération de la surface.

Pendant leur stockage et/ou pendant leur transport à l'air libre, les véhicules automobiles sont soumis à des agressions multiples qui peuvent produire des dommages rédhibitoires, nécessitant éventuellement une remise en état. Il peut s'agir d'agressions naturelles, telles que pluies acides, vent de sable, grêles, ... d'agressions extérieures telles que fientes d'animaux, légers chocs ou éraflures...

On a déjà proposé d'assurer la protection de la carrosserie d'un véhicule automobile en recouvrant celle-ci d'un film protecteur qui peut être enlevé soit manuellement par pelage, soit au moyen d'un jet d'eau sous haute pression. Le document WO 96/16747 décrit un film protecteur de ce type qui est obtenu par l'application sur la carrosserie d'une composition aqueuse d'un revêtement pelable, composition contenant une résine acrylique aqueuse et une substance absorbant les rayons ultraviolets.

Dans le document WO 96/13547, il s'agit d'une composition comprenant par exemple un copolymère acrylique, un polymère latex acrylique réagissant à la chaleur et une cire.

Les films protecteurs connus devraient permettre, selon le demandeur, d'assurer la protection recherchée vis-à-vis des agressions les plus courantes, mais par contre ne seraient pas efficaces pour les agressions aux chocs, s'agissant notamment des effets de la grêle dont on sait qu'elle peut provoquer sur les carrosseries de voitures des impacts irréversibles. Le but que s'est fixé le demandeur est de proposer un film protecteur qui puisse également assurer une protection efficace contre les agressions du type chocs pour des surfaces, notamment métalliques, telles que des carrosseries de véhicules automobiles ou toutes surfaces en tôlerie susceptibles d'être stockées et/ou transportées à l'air libre.

Ce but est parfaitement atteint par le matériau de l'invention qui, de manière connue, se présente sous la forme d'un film adhérent à ladite surface et apte à être éliminé. De manière caractéristique, ce matériau comporte un constituant absorbeur de chocs.

Par constituant absorbeur de chocs, il faut entendre un constituant qui a lui-même une capacité de déformation sous l'effet d'un choc permettant d'absorber l'impact provoqué par ledit choc ou encore un constituant capable de générer, dans le film de protection, des éléments absorbeurs de chocs, par exemple des microcavités.

Dans une variante préférée de réalisation, le constituant absorbeur de chocs consiste en une charge de micro-particules, par exemple en élastomère ou en caoutchouc. Il pourrait s'agir de microbilles ou microsphères, par exemple en polychlorure de vinylidène (PVDC), en polystyrène expansé ou en polyuréthane.

Avantageusement, le constituant absorbeur de chocs représente, en volume, de 30 à 60 % du matériau de protection.

Avantageusement, le matériau comporte une base acrylique aqueuse, des micro-particules d'élastomère et un liant du type résine/durcisseur.

La forme et la dimension des micro-particules sont déterminées en sorte de permettre la dépose du matériau de protection sur la surface à protéger par un procédé automatique tel qu'un pistolet de cabine de peinture. Par exemple, les micro-particules sont de l'ordre ou inférieures à 100 micromètres.

Il est clair que le matériau de l'invention n'est pas à même d'assurer une protection totale vis-à-vis de tous les chocs quelle que soit leur intensité. Son objectif est d'assurer une protection efficace contre les chocs les plus courants et en particulier les chocs répétés du type grêle. On sait statistiquement que l'intensité de la grêle varie selon la zone géographique concernée. Selon l'invention, il est possible d'adapter le matériau de protection pour tenir compte en particulier de la zone géographique dans laquelle vont être stockées les surfaces à protéger, en faisant varier l'épaisseur du matériau. Cette épaisseur pourra être, pour assurer une protection efficace contre la grêle, comprise entre 3 et 8 mm selon l'intensité prévisible de celle-ci.

C'est un autre objet de l'invention que de revendiquer un procédé spécialement conçu pour l'application sur la surface à protéger du matériau précité. Ce procédé consiste :
- à réaliser un mélange homogène de deux constituants, à savoir un premier constituant de base apte à former un film susceptible d'adhérer à la surface à protéger et à être ensuite éliminé et un second constituant absorbeur de chocs,
- à appliquer ledit mélange sur la surface à protéger en une ou plusieurs couches.

Dans le cas où le premier constituant de base est du type pelable, c'est-à-dire qu'il adhère suffisamment sur la surface à protéger mais qu'il peut en être enlevé manuellement par pelage, il est préférable d'appliquer sur la surface à protéger une couche préliminaire du seul constituant de base. On obtient ainsi, en contact avec la surface à protéger, une couche uniforme du constituant pelable, ce qui permet de réaliser un retrait du matériau, par pelage, dans des conditions optimales.

Dans le cas où le second constituant absorbeur de chocs est un constituant expansible sous l'effet de la chaleur (et non expansé lors de la préparation du mélange), le procédé comporte un traitement thermique du matériau, avant, pendant ou après application du mélange sur la surface.

Dans le cas où le second constituant absorbeur de chocs est expansible par réaction chimique avec un composé d'expansion, l'application sur la surface se fait concomitamment ou immédiatement après la mise en contact d'abord du second constituant et dudit composé puis du second constituant expansé ou en cours d'expansion et du premier constituant. Par exemple, cela peut être réalisé à l'aide d'un pistolet mélangeur, alimenté à partir des deux constituants et du composé et réalisant successivement deux mélanges à savoir un premier mélange comprenant le second constituant et le composé d'expansion et un second mélange comprenant le premier mélange et le premier constituant. C'est le second mélange qui est projeté sur la surface à protéger.

La présente invention sera mieux comprise à la lecture de la description qui va être faite d'un mode préféré de réalisation d'un matériau pour la protection de carrosseries de véhicules automobiles, étant rappelé que ce matériau peut également servir à protéger toute surface, en particulier métallique, susceptible d'être déformée sous l'impact de chocs tels que ceux provoqués par la grêle.

Le matériau de l'invention, de manière connue, se présente sous la forme d'un film protecteur qui adhère, de manière temporaire, à la surface à protéger et qui peut, en conséquence, être éliminé, soit manuellement par pelage soit par dissolution, sans laisser de traces ou de résidus sur la surface.

Ce matériau comprend deux constituants. Le premier dénommé constituant de base confère au film protecteur son caractère filmogène et détachable et ses propriétés d'adhérence temporaire sur la surface et sert de structure d'accueil pour le constituant absorbeur de chocs. Il est bien sûr inerte par rapport à la surface à protéger.

Comme exemple de constituant de base, on peut citer une émulsion de résine acrylique en phase aqueuse, un copolymère acrylique, un copolymère d'éthylène et d'acétate de vinyle, un prépolymère avec agents de durcissement et de réticulation.

Le second constituant est dit absorbeur de chocs, dans la mesure où sa présence dans le matériau permet à celui-ci d'amortir les impacts des chocs en sorte que ces impacts n'aient pas une force suffisante pour altérer durablement la surface à protéger.

Dans un mode préféré de réalisation, ce second constituant consiste dans des micro-particules qui sont mélangées au premier constituant, comme peut l'être une charge.

De préférence, il s'agit de micro-particules d'élastomère ou de caoutchouc. Dans une moindre mesure, il pourrait s'agir de microbilles de chlorure de polyvinylidène (PVDC) ou encore de polystyrène expansé ou de polyuréthane.

Dans un exemple précis de réalisation, on mélange, de manière homogène, une émulsion de résine acrylique en phase aqueuse avec des micro-particules d'un élastomère, à raison de 70 % de micro-particules par rapport à l'ensemble résine/micro-particules, ce pourcentage étant donné en volume et non en poids. Ce mélange comporte également un liant du type résine / durcisseur, apte à favoriser l'homogénéité de dispersion des micro-particules, par exemple de l'ordre de 1 %.

Ce mélange a été appliqué sur le toit d'un véhicule automobile, en plusieurs couches, de manière à former un matériau de protection ayant une épaisseur de l'ordre de 3 mm. Le toit ainsi protégé n'a pas été marqué par les impacts d'une grêle habituelle, tandis que les autres parties de la carrosserie, non protégées, portaient des traces d'impacts irréversibles.

Selon l'agression prévisible, notamment en fonction de la zone géographique où a lieu le stockage des véhicules automobiles, il est possible de faire varier certains paramètres du matériau de l'invention, notamment son épaisseur et la proportion du constituant absorbeur de chocs. L'épaisseur est de préférence comprise entre 3 et 8 mm, tandis que la proportion en volume, du constituant absorbeur de chocs est de préférence comprise entre 30 et 60 % du volume total du matériau. On comprend que plus ce pourcentage est élevé et plus l'épaisseur est importante, plus le matériau sera efficace au regard de chocs de plus forte intensité.

En particulier lorsque le premier constituant présente un caractère pelable, il est souhaitable d'appliquer sur la surface à traiter une couche préliminaire dudit premier constituant de base, de manière à ce que tout l'interface entre le matériau protecteur et la surface à protéger présente le caractère pelable qui permet son enlèvement facile.

Le fait que le premier constituant soit à la fois dans la couche préliminaire et dans le mélange confère une bonne cohésion entre les couches successives.

Dans l'exemple précité, les micro-particules d'élastomère étaient préformées, lors du mélange. Il est également possible d'envisager que le second constituant absorbeur de chocs, s'agissant d'un constituant expansible sous l'effet de la chaleur, soit à l'état non expansé dans le mélange. Dans ce cas, le procédé d'application du matériau selon l'invention de la surface à protéger nécessite un traitement thermique avant, pendant ou après application sur la surface. Il peut s'agir par exemple d'un post-traitement réalisé par passage du véhicule sous des rampes à infrarouge disposées en regard des zones où est appliqué le mélange constitutif du matériau de protection.

Dans le cas de microbilles formées à partir d'un copolymère de chlorure de vinylidène et d'acrylonitrile, chaque microbille comporte l'encapsulage d'un agent expansant qui peut être l'isobutane, par ledit copolymère ; lors du traitement thermique, le copolymère se ramollit progressivement et l'isobutane liquide s'évapore entraînant l'expansion des microbilles.

Le caractère expansible du second constituant absorbeur de chocs peut également se révéler par réaction chimique avec un composé dit d'expansion. Dans ce cas, l'application sur la surface à protéger du mélange se fait concomitamment ou immédiatement après la mise en contact du second constituant et du composé d'expansion. Cette application se fait de préférence à l'aide d'un pistolet mélangeur, les deux constituants et le composé d'expansion étant alimentés indépendamment les uns des autres et n'étant mis en contact qu'au niveau de la tête du mélangeur de sorte que la réaction d'expansion se développe lors de l'application du mélange ainsi formé sur la surface à protéger. De préférence, il y a d'abord mise en contact du second constituant et du composé d'expansion, qui provoque la réaction d'expansion, puis mélange avec le premier constituant.

Si la capacité de protection peut varier d'une région à l'autre, en fonction de l'agression prévisible, il peut en être de même en ce qui concerne les différentes portions de la surface à protéger. Ainsi, s'agissant d'un véhicule automobile, il pourra être appliqué sur le pavillon et le capot un matériau assurant une meilleure protection dans l'absolu, que sur les portières, tandis que les vitres seront exemptes du matériau de protection de l'invention. Cette variabilité de la protection se fera préférentiellement en appliquant un nombre plus ou moins important de couches du mélange sur la portion correspondante.

## Revendications

1. Matériau pour la protection d'une surface, notamment métallique, se présentant sous la forme d'un film adhérent à ladite surface et apte à être éliminé, caractérisé en ce qu'il comporte un constituant absorbeur de chocs.

2. Matériau selon la revendication 1 caractérisé en ce que le constituant absorbeur de chocs consiste en une charge de micro-particules d'élastomère ou de caoutchouc.

3. Matériau selon la revendication 1 caractérisé en ce que le constituant absorbeur de chocs consiste en une charge de microbilles ou microsphères, en polychlorure de vinylidène (PVDC), en polystyrène expansé ou en polyuréthane.

4. Matériau selon l'une des revendications 1 à 3 caractérisé en ce que le constituant absorbeur de chocs représente, en volume, de 30 à 60 % du matériau.

5. Matériau selon l'une des revendications 1 à 4 caractérisé par une épaisseur comprise entre 3 et 8 mm.

6. Matériau selon la revendication 2 caractérisé en ce qu'il est constitué par une résine acrylique en phase aqueuse, par des micro-particules d'élastomère ou de caoutchouc et par un liant du type résine / durcisseur.

7. Procédé pour l'application sur une surface à protéger du matériau selon la revendication 1 caractérisé en ce qu'il consiste :
- à réaliser un mélange homogène de deux constituants, à savoir un premier constituant de base apte à former un film susceptible d'adhérer à la surface à protéger et à être ensuite éliminé et un second constituant absorbeur de chocs,
- à appliquer ledit mélange sur la surface à protéger en une ou plusieurs couches.

8. Procédé selon la revendication 7 caractérisé en ce que, le premier constituant de base étant du type pelable, on applique sur la surface à protéger une couche préliminaire du seul constituant de base.

9. Procédé selon la revendication 7 caractérisé en ce que le second constituant absorbeur de chocs étant un constituant expansible sous l'effet de la chaleur et non expansé lors de la préparation du mélange, on réalise un traitement thermique du matériau avant, pendant ou après application du mélange sur la surface.

10. Procédé selon la revendication 7 caractérisé en ce que le second constituant absorbeur de chocs étant expansible par réaction chimique avec un composé d'expansion, l'application sur la surface se fait concomitamment ou immédiatement après la mise en contact d'abord du second constituant et du composé d'expansion puis du second constituant expansé ou en cours d'expansion et du premier constituant.

11. Procédé selon la revendication 10 caractérisé en ce que l'application du matériau est réalisée à l'aide d'un pistolet mélangeur, alimenté à partir des deux constituants et du composé d'expansion, indépendamment les uns des autres, et avec lequel le mélange est projeté sur la surface à protéger.
